# EUROPÄISCHE PATENTSCHRIFT

(11) **EP 0 740 365 B1**
(45) Veröffentlichungstag und Bekanntmachung des Hinweises auf die Patenterteilung: **05.07.2000**
(21) Anmeldenummer: 96105527.4
(22) Anmeldetag: 06.04.1996
(51) Int. Cl.: H01R 9/24, B60R 16/02

(54) **Steuermodul von Kraftfahrzeugen**
Control module for motor vehicle
Module de commande pour automobile

(30) Priorität: 28.04.1995 DE 19515622
(43) Veröffentlichungstag der Anmeldung: 30.10.1996
(73) Patentinhaber: TEMIC TELEFUNKEN microelectronic GmbH, 90411 Nürnberg (DE)
(72) Erfinder: Flierl, Werner, 92237 Sulzbach-Rosenberg (DE); Hettich, Gerhard, Dr., 90599 Dietenhofen (DE); Genzel, Michael, 90574 Rosstal (DE); Gottschaller, Armin, 92318 Neumarkt (DE); Schmid, Thomas, 90429 Nürnberg (DE)
(74) Vertreter: Maute, Hans-Jürgen, Dipl.-Ing.

(56) Entgegenhaltungen:
- DE-A- 3 311 743
- US-A- 4 785 532
- US-A- 5 127 440

## Beschreibung

in Kraftfahrzeugen werden in zunehmendem Maße Steuermodule aus Steuereinheiten und diesen zugeordneten Sensoren/Aktuatoren für unterschiedliche Aufgaben und Wirkungsweisen eingesetzt - insbesondere zur Steuerung und/oder Regelung fahrspezifischer Vorgänge bzw. Prozesse. Hierbei dienen die Sensoren zur Erfassung von Meßwerten und die Aktuatoren zur Betätigung von Stellgliedern - beispielsweise sind Sensoren zur Erfassung der Temperatur, der Drehzahl oder des Drucks und Aktuatoren zur Betätigung von Schaltventilen oder Motoren vorgesehen - während die Meßwertsignale der Sensoren und die Ausgangssignale der Aktuatoren durch die Steuereinheiten des Kraftfahrzeugs verarbeitet und ausgewertet werden. Die Sensoren bestehen aus einem Sensorelement und Sensoranschlüssen, die Aktuatoren aus einem Aktuatorelement und Aktuatoranschlüssen; die Steuereinheiten sind aus einem Trägerkörper (Leiterplatte) mit einer darauf angeordneten Schaltungsanordnung und einem die Schaltungsanordnung zumindest teilweise umschließenden Gehäusekörper aufgebaut, in dem ein mit der Schaltungsanordnung (beispielsweise über Bonddrähte) elektrisch leitend verbundenes Stanzgitter zur Bildung der Anschlußkontakte und des Anschlußsteckers integriert ist. Die üblicherweise an den Aggregaten des Kraftfahrzeugs (Motor, Getriebe etc.) über separate Verbindungsteile (beispielsweise Gewinde) angebrachten und von einem Gehäuse hermetisch umschlossenen Sensoren und Aktuatoren werden mit den getrennt hiervon (beispielsweise im Motorraum oder im Innenraum des Kraftfahrzeugs) angeordneten Steuereinheiten mittels Verbindungsleitungen verbunden und über Verbindungsstecker an die Stanzgitter der Steuereinheiten angeschlossen.

Nachteilig bei diesen Steuermodulen von Kraftfahrzeugen aus Sensoren/Aktuatoren und zugeordneten Steuereinheiten ist, daß zum einen zum Anschluß der Sensoren/Aktuatoren an die Steuereinheiten eine Vielzahl von oftmals recht langen Verbindungsleitungen (Kabelbaum) und eine Vielzahl von Verbindungssteckern zur Kontaktierung erforderlich ist, deren Unterbringung im Kraftfahrzeug oftmals schwierig und mit einem großen Platzbedarf und einem hohen Kostenaufwand verbunden ist, und daß zum andern die Zuverlässigkeit der Signalübertragung aufgrund des langen Signalwegs von den Sensoren/Aktuatoren zu den Steuereinheiten und wegen der Störanfälligkeit der Verbindungsleitungen und Verbindungsstecker nicht immer gewährleistet ist.

DE-A-3 311 743 offenbart eine auf einer Platine angeordnete Schaltungs anordnung, in der ein Sensor integriert ist, wobei die Platine in einem Gehäuse angeordnet ist.

Der Erfindung liegt die Aufgabe zugrunde, ein Steuermodul von Kraftfahrzeugen gemäß dem Oberbegriff des Patentanspruchs 1 anzugeben, das die genannten Nachteile vermeidet und das demgegenüber vorteilhafte Eigenschaften aufweist.
Diese Aufgabe wird gemäß der Erfindung durch die Merkmale im Kennzeichen des Patentanspruchs 1 gelöst.
Vorteilhafte Weiterbildungen der Erfindung ergeben sich aus den Unteransprüchen.

Beim vorgestellten Steuermodul wird zumindest ein Teil (vorzugsweise werden alle) der Sensoren/Aktuatoren mit der zugeordneten Steuereinheit direkt kontaktiert, indem die Sensoranschlüsse/Aktuatoranschlüsse der Sensoren/Aktuatoren direkt mit den Stanzgitteranschlüssen der Steuereinheit verbunden werden. Beispielsweise erfolgt diese direkte Verbindung und Kontaktierung der Sensoranschlüsse/Aktuatoranschlüsse bei in unmittelbarer Nähe der Steuereinheit angeordneten Sensoren/Aktuatoren über an den Enden der Stanzgitteranschlüsse angebrachten Federelementen bzw. Gabelelementen, die die Sensoranschlüsse/Aktuatoranschlüsse umfassen bzw. einschließen; vorzugsweise erfolgt diese direkte Verbindung und Kontaktierung jedoch durch Aufbringen der Sensorelemente/Aktuatorelemente auf das oder die Stanzgitter der Steuereinheit sowie durch Herstellung eines elektrischen Kontakts zwischen den Sensoranschlüssen/Aktuatoranschlüssen und den Stanzgitteranschlüssen - die Sensoren/Aktuatoren, d. h. die Sensorelemente/Aktuatorelemente und die Sensoranschlüsse/Aktuatoranschlüsse, sind zusammen mit den Stanzgittern bzw. den Stanzgitteranschlüssen vom Gehäusekörper der Steuereinheit umschlossen. Die Anzahl der vorhandenen Sensoren/Aktuatoren und die Anzahl der zu kontaktierenden Sensoranschlüsse/Aktuatoranschlüsse bestimmt die Anzahl der erforderlichen Stanzgitter der Steuereinheit und die Anzahl der Stanzgitteranschlüsse des jeweiligen Stanzgitters.
Vorteilhafterweise wird beim beschriebenen Steuermodul infolge der direkten Verbindung und Kontaktierung von Sensoren/Aktuatoren und Steuereinheit
- der Aufwand an Verbindungsleitungen Verkabelungsaufwand) im Kraftfahrzeug drastisch reduziert, was neben fertigungstechnischen Vereinfachungen auch eine Reduzierung des Platzbedarfs und der Kosten zur Folge hat,
- die Kontaktierung der Sensoren/Aktuatoren ohne Verbindungsstecker realisiert, wodurch eine weitere Reduzierung des Platzbedarfs und der Kosten gegeben ist,
- die Störanfälligkeit der Signalübertragung reduziert und somit die Zuverlässigkeit und die EMV-Verträglichkeit des Steuermoduls erhöht,
- im Falle des direkten Aufbringens der Sensoren/Aktuatoren auf die Stanzgitteranschlüsse der Steuereinheit kein separates Gehäuse für die Sensoren/Aktuatoren benötigt.

Weiterhin soll ein Steuermodul für die Getriebesteuerung eines Kraftfahrzeugs anhand der Zeichnung näher beschrieben werden; die Figuren 1 und 2 zeigen in verschiedenen Schnittzeichnungen des Steuermoduls Verbindungsmöglichkeiten zwischen Sensoren/Aktuatoren und einer Steuereinheit, die Figur 3 (Figuren 3a bis 3g) mehrere Prozeßschritte bei der Herstellung des Steuermoduls.

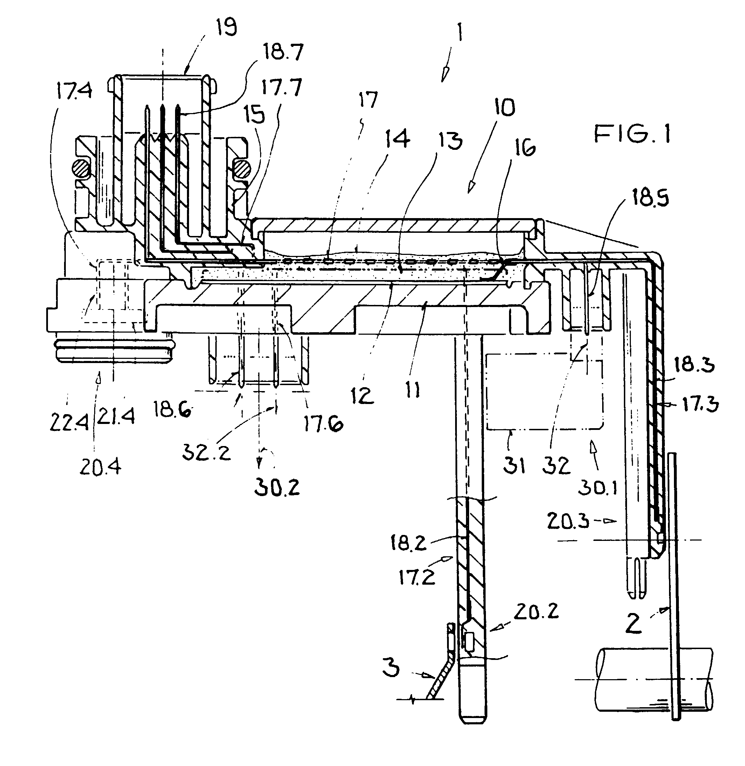

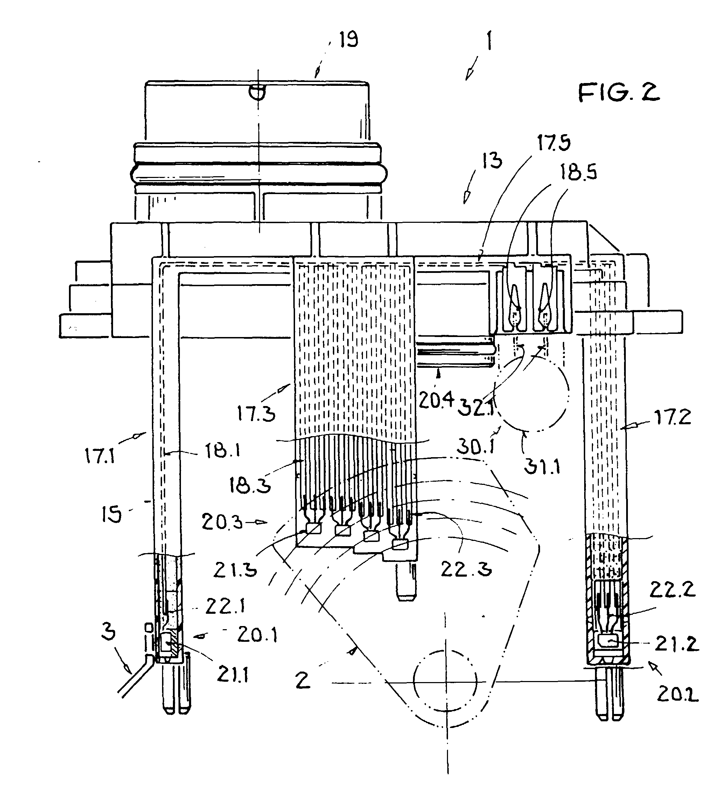

Gemäß den Figuren 1 und 2 umfaßt das in den Aggregateraum des Getriebes integrierte (Getriebe-) Steuermodul 1 ein Getriebe-Steuergerät als Steuereinheit 10, mehrere Sensoren 20 zur Drehzahlmessung, Druckerfassung und Wählhebelerkennung und Aktuatoren 30 zur Ventilansteuerung.
Das Getriebe-Steuergerät 10 des Steuermoduls 1 besteht aus einer beispielsweise als Kühlkörper ausgebildeten Grundplatte 11 (beispielsweise aus Aluminium-Druckguß mit den Maßen 160 mm x 150 mm x 14 mm), einem beispielsweise durch Aufkleben mit der Grundplatte 11 thermisch und mechanisch verbundenen, als Leiterplatte ausgebildeten Trägerkörper 12 (beispielsweise aus Al₂O₃ mit den Maßen 110 mm x 80 mm x 1 mm), einer auf dem Trägerkörper 12 angeordneten Dickschicht-Schaltungsanordnung 13 mit einer Vielzahl von mittels der Vergußmasse 14 vergossenen passiven und aktiven SMD-Halbleiterbauelementen, einem Gehäusekörper 15 (beispielsweise aus glasfaserverstärktem Kunststoff), der die Schaltungsanordnung 13 zum Schutz der Halbleiterbauelemente umschließt, mehreren (beispielsweise neun) in den Gehäusekörper 15 nebeneinander und übereinander integrierten und mit der Schaltungsanordnung 13 beispielsweise über Bonddrähte 16 verbundenen Stanzgittern 17, die eine unterschiedliche Anzahl von Stanzgitteranschlüssen 18 aufweisen können (beispielsweise von 3 bis 12 Stanzgitteranschlüsse), und einem Anschlußstecker 19, über den das Getriebe-Steuergerät 10 bzw. das Steuermodul 1 mittels Verbindungsleitungen mit dem Getriebe verbunden ist, so daß das Getriebe mit dem Ausgangssignal des Steuermoduls 1 bzw. des Getriebe-Steuergeräts 10 als Steuersignal beaufschlagt wird. Mehrere der Stanzgitter 17 dienen dabei zur Bildung des Anschlußsteckers 19 des Getriebe-Steuergeräts 10, die restlichen Stanzgitter 17 zur Aufnahme und Kontaktierung von Sensoren 20 und Aktuatoren 30; der Übersichtlichkeit halber sind in den Figuren 1 und 2 nur ein Teil der Stanzgitter 17 dargestellt: die Stanzgitter 17.1 - 17.4 zur Kontaktierung von Sensoren 20, die Stanzgitter 17.5 und 17.6 zur Kontaktierung von Aktuatoren 30 und das Stanzgitter 17.7 zur Bildung eines Teils des Anschlußsteckers 19.
Als Sensoren 20 des Getriebe-Steuermoduls 1 sind drei als Hallsensoren ausgebildete Drehzahlsensoren 20.1, 20.2 zur Drehzahlerfassung, vier als Hallsensoren ausgebildete Wählhebelsensoren 20.3 zur Wählhebelerkennung und ein Drucksensor 20.4 zur Druckerfassung vorgesehen, wobei die vier Wählhebelsensoren 20.3 auf dem Stanzgitter 17.3, zwei Drehzahlsensoren 20.1 auf dem Stanzgitter 17.1, ein Drehzahlsensor 20.2 auf dem Stanzgitter 17.2 und der Drucksensor 20.4 auf dem Stanzgitter 17.4 angeordnet sind; weiterhin ist ein beispielsweise als Proportionalventil ausgebildeter Aktuator 30.1 vorgesehen, der mit dem Stanzgitter 17.5 und ein beispielsweise als Proportionalventil ausgebildeter Aktuator 30.2 vorgesehen, der mit dem Stanzgitter 17.6 verbunden ist. Die von der Wählhebelwelle 2 angesteuerten Wählhebelsensoren 20.3 detektieren die Stellung des Getriebe-Wählhebels entsprechend dem Fahrerwunsch (ParkstellungNorwärts/Rückwärts), die beiden Drehzahlsensoren 20.1 dienen zur Erkennung der Abtriebsdrehzahl und zur Erkennung der Abtriebsrichtung des Gebers 3, der Drehzahlsensor 20.2 dient zur Erkennung der Motordrehzahl, der Drucksensor 20.4 zur Erfassung des Getriebeöldrucks, der Aktuator 30.1 zur Ansteuerung der Getriebeübersetzung und der Aktuator 30.2 zur Ansteuerung der Getriebeölkühlung; die Informationen der Sensoren 20 und der Aktuatoren 30 werden an das Getriebe-Steuergerät 10 weitergeleitet, das diese Informationen zu einem Steuersignal verarbeitet. Die Sensoren 20 bestehen jeweils aus einem Sensorelement 21 als Sensorkörper und drei Sensoranschlüssen 22, die Aktuatoren 30 aus einem Aktuatorelement 31 als Aktuatorkörper und zwei Aktuatoranschlüssen 32.
Die Verbindung zwischen den Sensoren 20 und dem Getriebe-Steuergerät 10 erfolgt durch Aufsetzen (beispielsweise Aufschweißen) der Sensorelemente 21 auf die entsprechenden Stanzgitter 17 (zwei Sensorelemente 21.1 auf das Stanzgitter 17.1, ein Sensorelement 21.2 auf das Stanzgitter 17.2, vier Sensorelemente 21.3 auf das Stanzgitter 17.3, ein Sensorelement 21.4 auf das Stanzgitter 17.4) und durch Kontaktierung der jeweiligen drei Sensoranschlüsse 22 (22.1, 22.2, 22.3, 22.4) mit den entsprechenden Stanzgitteranschlüssen 18 (18.1, 18.2, 18.3, 18.4). Die leitende Verbindung zwischen den Aktuatoren 30 (30.1, 30.2) und dem Getriebe-Steuergerät 10 erfolgt mittels direkter Kontaktierung der an ihrem Ende Gabelelemente/Federelemente aufweisenden Stanzgitteranschlüsse 18 (18.5, 18.6) des entsprechenden Stanzgitters 17 (17.5, 17.6) mit den beiden Aktuatoranschlüssen 32 (32.1, 32.2) der sich unmittelbar neben dem Getriebe-Steuergerät 10 befindlichen Aktuatoren 30 (30.1, 30.2) - beispielsweise durch Umschließen oder Verzahnen der Aktuatoranschlüsse mittels der Gabelelemente/Federelemente.

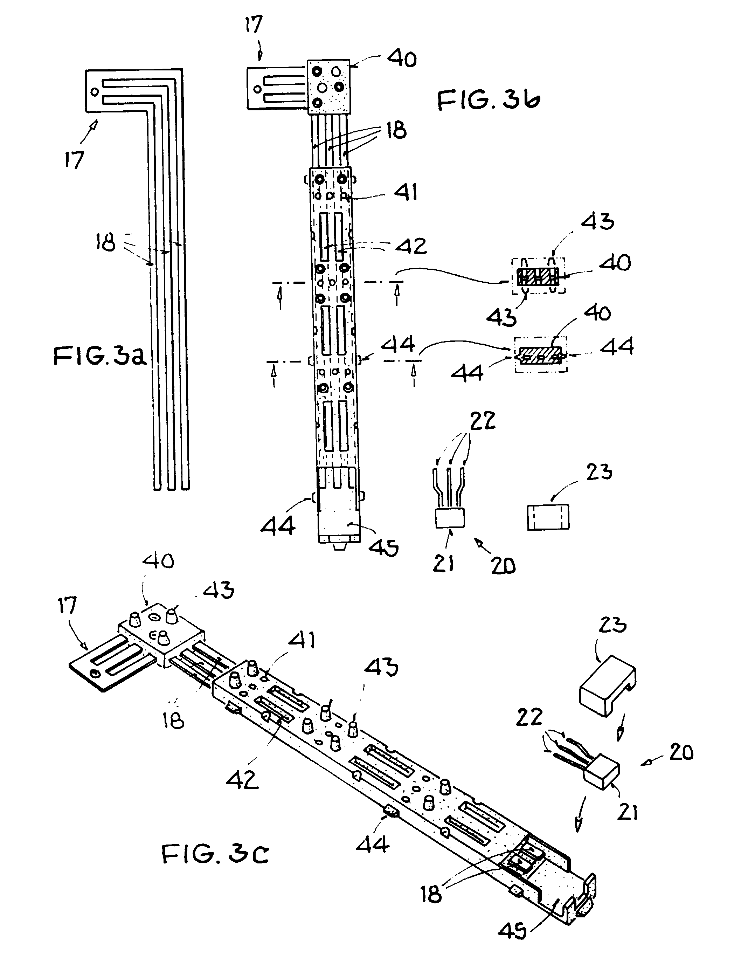

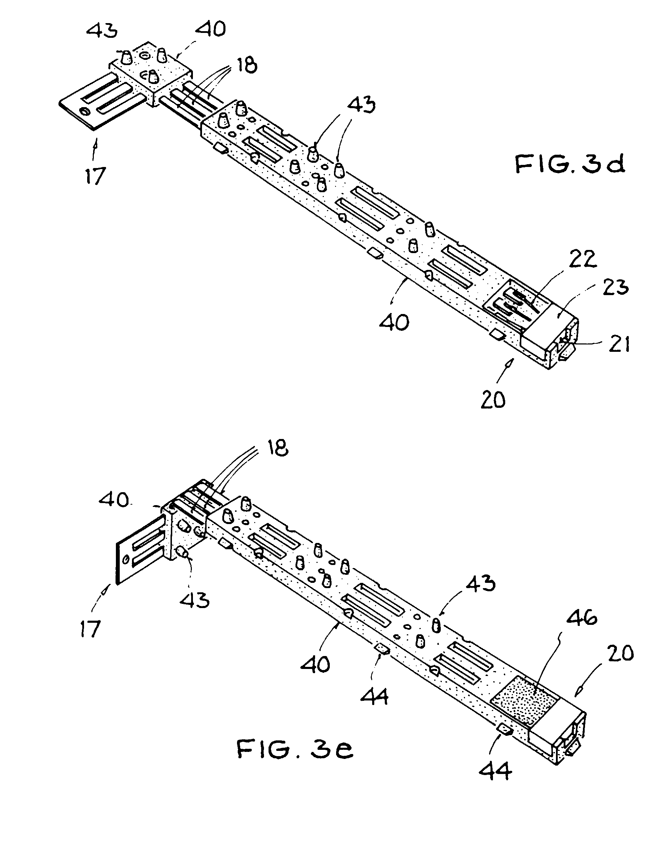

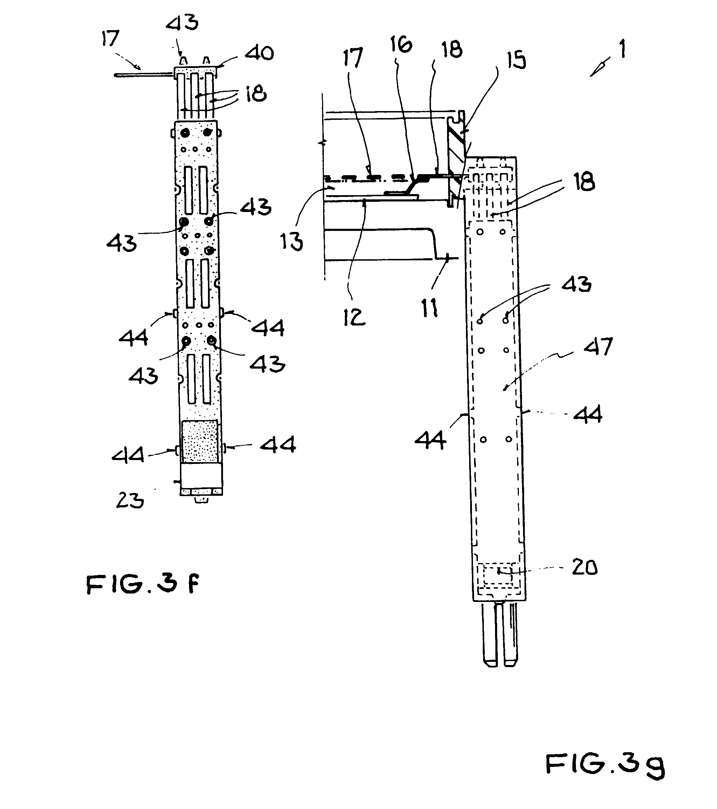

Das Herstellungsverfahren des Getriebe-Steuermoduls 1 aus Getriebe-Steuergerät 10 und Sensoren 20/Aktuatoren 30 wird anhand der Figur 3 erläutert, wobei in den Figuren 3a bis 3g verschiedene Verfahrensschritte dargestellt sind:
- Die Figur 3a zeigt ein einzelnes Stanzgitter 17 des Getriebe-Steuergeräts 10 mit drei Stanzgitteranschlüssen 18 beispielsweise aus einer Kupfer-Zinn-Legierung (beispielsweise aus Kupfer mit 6 % Zinn-Anteil).
- Die Figur 3b zeigt in Draufsicht und die Figur 3c in Seitenansicht das teilweise mit Kunststoff 40 umspritzte Stanzgitter 17 ("Vorumspritzling"). Hierbei werden im Kunststoff 40 beidseitig (auf der Oberseite und der Unterseite) auf Höhe der Stanzgitteranschlüsse 18 Löcher 41 zur Zentrierung, zwischen den Stanzgitteranschlüssen 18 Öffnungen 42 als Trennhilfen und auf der Oberseite des Kunststoffs 40 Erhebungen 43 ("Nasen") sowie seitlich am Kunststoff 40 Erhebungen 44 als Zentrierhilfe und zur Abstützung des Vorumspritzllngs gebildet; weiterhin ist an einem Ende des Stanzgitters 17 auf der Oberseite des Kunststoffs 40 eine Aussparung 45 zur Aufnahme eines zur Signalverstärkung dienenden Magneten 23 und des auf dem Magneten aufgeklebten Sensors 20 (Sensorelement 21, Sensoranschlüsse 22) vorgesehen.
- Die Figur 3d zeigt das teilweise mit Kunststoff 40 umspritzte Stanzgitter 17, bei dem Sensor 20 und Magnet 23 in die Aussparung 45 integriert wurden.
- In der Figur 3e ist die Aussparung 45 mit einer Silikon-Vergußmasse zum Schutz der Sensoranschlüsse 22 aufgefüllt; das dem Sensor 20 gegenüberliegende Endstück des Stanzgitters 17 wurde um 90° nach unten umgebogen.
- in der Figur 3f ist in Draufsicht das zum Einlegen in eine Spritzform vorbereitete Stanzgitter 17 dargestellt; in der Spritzform wird es mit einem zweiten Kunststoffmaterial (beispielsweise glasfaserverstärkter Kunststoff) zur Bildung des Gehäusekörpers 15 umspritzt.
- Die Figur 3g zeigt eine Teilansicht des fertig montierten Steuermoduls 1; hierbei wurde die auf dem Kühlkörper 11 und der Leiterplatte 12 angeordnete Schaltungsanordnung 13 über Bonddrähte 16 mit dem Stanzgitter 17 bzw. den Stanzgitteranschlüssen 18 verbunden. Die Schaltungsanordnung 13 und die Stanzgitter 17 (und somit auch der Sensor 20) sind vom Gehäusekörper 15 umschlossen.

## Patentansprüche

1. Steuermodul (1) von Kraftfahrzeugen bestehend aus:
• einer Steuereinheit (10) mit einem Trägerkörper (12), einer auf dem Trägerkörper (12) aufgebrachten Schaltungsanordnung (13), einem den Trägerkörper (12) zumindest teilweise umschließenden Gehäusekörper (15), und mindestens einem im Gehäusekörper (15) integrierten Stanzgitter (17) mit mehreren Stanzgitteranschlüssen (18),
• der Steuereinheit (10) zugeordneten Sensoren (20) und/oder Aktuatoren (30) aus Sensorelementen (21) und Sensoranschlüssen (22) bzw. Aktuatorelementen (31) und Aktuatoranschlüssen (32),
dadurch gekennzeichnet, daß:
• die Sensoren (20)/Aktuatoren (30) vom Gehäusekörper (15) umschlossen sind, wobei der Gehäusekörper (15) so ausgeformt ist, daß die Sensorelemente (21)/Aktuatorelemente (31) bei ihren zugehörigen Gebern (2,3) plaziert sind,
• die Sensoren (20)/Aktuatoren (30) jeweils auf eines der Stanzgitter (17) aufgesetzt sind,
• die Sensoren (20)/Aktuatoren (30) jeweils durch direkte Verbindungen ihrer Sensoranschlüsse (21)/Aktuatoranschlüsse (31) mit Stanzgitteranschlüssen (18) der Stanzgitter (17) der Steuereinheit (10) kontaktiert sind.

2. Steuermodul nach Anspruch 1, dadurch gekennzeichnet, daß mindestens ein Stanzgitter (17.5, 17.6) der Stanzgitter (17) der Steuereinheit (10) an einem Ende an den Stanzgitteranschlüssen (18.5, 18.6) angebrachte Federelemente oder/und Gabelelemente aufweist, die eine Steckverbindung bilden, und daß die Sensoranschlüsse (22)/ Aktuatoranschlüsse (32) der Sensoren (20)/ Aktuatoren (30) durch Druck mit den Federelementen/Gabelelementen der Stanzgitteranschlüsse (18.5, 18.6) der Stanzgitter (17.5,17.6) leitend verbunden sind.

3. Steuermodul nach einem der Ansprüche 1 oder 2, dadurch gekennzeichnet, daß der Trägerkörper (12) auf einer als Kühlkörper ausgebildeten Grundplatte (11) angeordnet ist.

4. Steuermodul nach einem der Ansprüche 1 bis 3, dadurch gekennzeichnet, daß der Gehäusekörper (15) der Steuereinheit (10) bzw. des Steuermoduls (1) aus einem Kunststoffmaterial gebildet ist.

## Claims

1. A control module (1) for motor vehicles consisting of:
- a control unit (10) including a support member (12), a circuit arrangement (13) disposed on the support member (12), a housing member (15) at least partially enclosing the support member (12), and at least one stamped framework (17) incorporating a plurality of stamped framework terminals (18) integrated in the housing body (15),
- sensors (20) and/or actuators (30) comprising respective sensors elements (21) and sensor terminals (22) or actuator elements (31) and actuator terminals (32) associated with the control unit (10),
characterised in that
- the sensors (20) / actuators (30) are enclosed by the housing member (15), whereby the housing member (15) is shaped such that the sensor elements (21) / actuator elements (31) are positioned near their appertaining sender means (2, 3),
- each of the sensors (20) / actuators (30) is placed on one of the stamped frameworks (17),
the sensors (20) / actuators (30) make contact by means of direct connections between their respective sensor terminals (21) / actuator terminals (31) and the stamped framework terminals (18) of the stamped framework (17) in the control unit (10).

2. A control module in accordance with Claim 1, characterised in that at least one stamped framework (17.5, 17.6) of the stamped frameworks (17) in the control unit (10) comprises spring elements and/or fork elements forming a plug connection which are provided on the stamped framework terminals (18.5, 18.6) at one end thereof, and in that the sensor terminals (22) / actuator terminals (32) of the sensors (20) / actuators (30) are conductively connected to the spring elements / fork elements on the stamped framework terminals (18.5, 18.6) of the stamped framework (17.5, 17.6) by means of pressure.

3. A control module in accordance with Claim 1 or 2, characterised in that the support member (12) is arranged on a base plate (11) in the form of a heat sink.

4. A control module in accordance with any of Claims 1 to 3, characterised in that the housing member (15) of the control unit (10) or the control module (1) is formed from a synthetic material.

## Revendications

1. Module de commande (1) de véhicules se composant:
• d'une unité de commande (10) avec un support (12), d'un circuit (13) disposé sur le support (12), d'un boîtier (15) entourant au moins partiellement le support (12), et au moins d'une grille estampée (17) avec plusieurs bornes de connexion (18) de grille estampée intégrées dans le boîtier 15,
• des capteurs (20) et/ou des organes de manoeuvres (30) associés à l'unité de commande (10), se composant d'éléments de capteur (21) et de bornes de connexion de capteur (22) et d'éléments (31) d'organe de manoeuvre et de bornes de connexion d'organes de manoeuvre (32),
caractérisé en ce que :
• les capteurs (20)/organes de manoeuvre (30) sont entourés par le boîtier (15), le boîtier (15) étant façonné de sorte que les éléments de capteur (21) /éléments d'organes de manoeuvre (31) sont placés dans leurs générateurs (2, 3) associés,
• les capteurs (20)/organes de manoeuvre (30) sont placés respectivement sur l'une des grilles estampées (17),
• les capteurs (20)/organes de manoeuvre (30) sont mis en contact respectivement par liaisons directes de leurs bornes de connexion de capteur (21)/bornes de connexion d'organes de manoeuvre (31) avec les bornes de connexion (18) des grilles estampées (17) de l'unité de commande (10).

2. Module de commande selon la revendication 1, caractérisé en ce qu'au moins une grille estampée (17.5, 17.6) des grilles estampées (17) de l'unité de commande (10) présente à une extrémité des éléments élastiques et/ou des éléments de jonction disposés sur les bornes de connexion de grilles estampées (18.5, 18.6), qui forment une liaison par enfichage, et en ce que les bornes de connexion de capteur (22)/bornes de connexion d'organes de manoeuvre (32) des capteurs (20)/organes de manoeuvre (30) sont reliées par pression avec les éléments élastiques/éléments de jonction des bornes de connexion (18.5, 18.6) des grilles estampées (17.5, 17.6).

3. Module de commande selon l'une des revendications 1 ou 2, caractérisé en ce que le support (10) est disposé sur une plaque de montage (11) réalisée sous forme de radiateur.

4. Module de commande selon l'une quelconque des revendications 1 à 3, caractérisé en ce que le boîtier (15) de l'unité de commande (10) ou du module de commande (1) est réalisé en une matière plastique.
